(19) Europäisches Patentamt
European Patent Office
Office européen des brevets

(11) **EP 3 987 688 B1**

(12) **FASCICULE DE BREVET EUROPEEN**

(45) Date de publication et mention de la délivrance du brevet:
**31.12.2025 Bulletin 2026/01**

(21) Numéro de dépôt: **20731894.0**

(22) Date de dépôt: **16.06.2020**

(51) Classification Internationale des Brevets (IPC):
***H04B 10/114*** *(2013.01)* ***G06V 10/143*** *(2022.01)*
***G06V 40/16*** *(2022.01)*

(52) Classification Coopérative des Brevets (CPC):
**H04B 10/1143; G06V 10/143; G06V 40/172**

(86) Numéro de dépôt international:
**PCT/EP2020/066623**

(87) Numéro de publication internationale:
**WO 2020/254321 (24.12.2020 Gazette 2020/52)**

(54) **MODULE DE DETECTION DE VISAGE ET DE COMMUNICATION OPTIQUE SANS FIL**

GESICHTSERKENNUNG UND OPTISCHES DRAHTLOSES KOMMUNIKATIONSMODUL

FACE DETECTION AND OPTICAL WIRELESS COMMUNICATION MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2019 FR 1906600**

(43) Date de publication de la demande:
**27.04.2022 Bulletin 2022/17**

(73) Titulaire: **Oledcomm**
**78140 Velizy Villacoublay (FR)**

(72) Inventeurs:
- **BECHADERGUE, Bastien**
  **92240 Malakoff (FR)**
- **DOMINGUEZ-GONZALEZ, Carlos**
  **92310 Sevres (FR)**
- **LARTIGUE, Clément**
  **92140 Clamart (FR)**
- **AZOULAY, Benjamin**
  **75013 Paris (FR)**

(74) Mandataire: **Bonnet, Michel**
**Cabinet Bonnet**
**93, rue Réaumur**
**75002 Paris (FR)**

(56) Documents cités:
**WO-A1-2018/063486** **WO-A1-2019/034838**
**US-A1- 2015 071 648** **US-B2- 9 524 421**

Il est rappelé que: Dans un délai de neuf mois à compter de la publication de la mention de la délivrance du brevet européen au Bulletin européen des brevets, toute personne peut faire opposition à ce brevet auprès de l’Office européen des brevets, conformément au règlement d’exécution. L’opposition n’est réputée formée qu’après le paiement de la taxe d’opposition. (Art. 99(1) Convention sur le brevet européen).



Processed by Luminess, 75001 PARIS (FR)

## Description

L'invention concerne les domaines de la reconnaissance faciale, de la protection oculaire et de la communication optique sans fil.

ARRIERE PLAN DE L'INVENTION

On assiste aujourd'hui au développement de nombreuses applications qui utilisent la technologie de la communication optique sans fil (OWC, pour *Optical Wireless Communication)* .

Ces applications sont à la fois des applications monodirectionnelles et des applications bidirectionnelles.

Parmi les applications monodirectionnelles, on trouve par exemple des lampes installées dans des musées, des gares, des aéroports ou des magasins, qui transmettent des informations géocontextualisées aux visiteurs, aux voyageurs et aux clients. On trouve aussi des lampadaires qui transmettent des mesures réalisées par des capteurs intégrés dans lesdits lampadaires. On trouve encore des dispositifs de géolocalisation.

Parmi les applications bidirectionnelles, on trouve par exemple des systèmes de transmission de données peer-to-peer (P2P) entre deux équipements, ou bien des systèmes de connexion d'un équipement à un réseau LiFi (pour Light *Fidelity)* via un point d'accès LiFi.

La communication optique sans fil présente de nombreux avantages par rapport aux communications radiofréquences traditionnelles. On peut citer par exemple le débit élevé qu'elle permet d'atteindre, la disponibilité de la bande passante, la réduction des risques liés aux ondes électromagnétiques, la réduction des risques de piratage, etc.

La communication optique sans fil est donc une technologie particulièrement prometteuse, et ce, dans de nombreux domaines industriels.

L'un des défis auxquels font face les concepteurs de solutions basées sur la communication optique sans fil est de réussir à intégrer cette technologie à moindre coût et dans un volume réduit dans des systèmes divers, par exemple dans des *smartphones* ou des tablettes.

OBJET DE L'INVENTION

L'invention a pour objet d'améliorer l'intégration de fonctions utilisant la communication optique sans fil

RESUME DE L'INVENTION

En vue de la réalisation de ce but, on propose un module de détection et de communication agencé pour mettre en œuvre une fonction de détection de visage et une fonction de communication optique sans fil, et comportant une unité de traitement, une chaîne d'émission comprenant un circuit frontal analogique d'émission et une source lumineuse, et une chaîne de réception comprenant un circuit frontal analogique de réception et un photorécepteur,

l'unité de traitement étant agencée pour émettre via la chaîne d'émission un signal de détection, pour recevoir via la chaîne de réception le signal de détection suite à sa réflexion sur une surface du visage d'un individu, pour mesurer un temps de vol du signal de détection, et pour évaluer une distance entre le module de détection et de communication et la surface du visage de l'individu,
l'unité de traitement étant en outre agencée pour émettre via la chaîne d'émission un signal émis de communication optique sans fil contenant des données à transmettre, et pour recevoir via la chaîne de réception un signal reçu de communication optique sans fil.

Un tel module de détection et de communication est divulgué dans WO 2019/034838 A1. Il permet de mettre en œuvre à la fois une fonction de détection de visage et une fonction de communication optique sans fil. La fonction de détection de visage peut être une fonction de reconnaissance faciale ou une fonction de protection oculaire. Les deux fonctions utilisent une même chaîne d'émission et une même chaîne de réception. Ainsi, grâce à ce module de détection et de communication, on met en œuvre deux fonctions en utilisant les mêmes ressources *hardware.* On intègre de la sorte à coût réduit et dans un volume réduit ces deux fonctions, ce qui est très avantageux, en particulier pour des équipements tels que des *smartphones* ou des tablettes dans lesquels l'espace disponible est extrêmement réduit.

On propose de plus un module de détection et de communication tel que celui qui vient d'être décrit, dans lequel la fonction de détection de visage est une fonction de reconnaissance faciale.

On propose en outre un module de détection et de communication tel que celui qui vient d'être décrit, dans lequel la fonction de détection de visage est une fonction de protection oculaire, et dans lequel l'unité de traitement est agencée pour interrompre l'émission du signal émis de communication optique sans fil lorsque la distance entre le module de détection et de communication et la surface du visage de l'individu est inférieure à un seuil prédéfini.

Selon l'invention, on propose de plus un module de détection et de communication tel que celui qui vient d'être décrit, dans lequel le signal de détection et le signal émis de communication optique sans fil sont inclus dans un même signal mixte.

Selon l'invention également, on propose un module de détection et de communication dans lequel le signal mixte comporte des paquets comprenant chacun une trame de détection, un préambule de communication et une trame de communication comprenant les données à transmettre.

On propose de plus un module de détection et de communication tel que celui qui vient d'être décrit, dans lequel la trame de détection comprend un signal binaire présentant une autocorrélation élevée.

On propose de plus un module de détection et de communication tel que celui qui vient d'être décrit, dans lequel le signal binaire comprend un code *pseudo-random noise.*

On propose en outre un module de détection et de communication tel que celui qui vient d'être décrit, dans lequel la fonction de communication optique sans fil est utilisée pour définir le code *pseudo-random noise* attribué au module de détection et de communication.

On propose de plus un module de détection et de communication tel que celui qui vient d'être décrit, dans lequel la trame de détection intègre des données d'horodatage permettant de calculer un temps de transmission du signal mixte.

On propose de plus un module de détection et de communication tel que celui qui vient d'être décrit, le circuit frontal analogique d'émission et le circuit frontal analogique de réception étant intégrés dans un même composant électronique.

On propose aussi un module de détection et de communication tel que celui qui vient d'être décrit, le module de détection et de communication étant intégré dans un unique composant optoélectronique.

On propose de plus un module de détection et de communication tel que celui qui vient d'être décrit, comprenant en outre un dispositif optique d'émission en sortie de la chaîne d'émission.

On propose de plus un module de détection et de communication tel que celui qui vient d'être décrit, dans lequel le dispositif optique d'émission comprend une première lentille convergente ou une lentille divergente ou une première lentille *freeform.*

On propose de plus un module de détection et de communication tel que celui qui vient d'être décrit, comprenant en outre un dispositif optique de réception en entrée de la chaîne de réception.

On propose de plus un module de détection et de communication tel que celui qui vient d'être décrit, dans lequel le dispositif optique de réception comprend une deuxième lentille convergente ou une deuxième lentille *freeform* ou un concentrateur optique.

On propose de plus un module de détection et de communication tel que celui qui vient d'être décrit, dans lequel la source lumineuse comprend une LED ou une LED à cavité résonnante ou une diode laser à cavité verticale émettant par la surface.

On propose de plus un module de détection et de communication tel que celui qui vient d'être décrit, dans lequel le photorécepteur comprend une photodiode PIN ou une photodiode à avalanche ou une diode à avalanche à photon unique.

On propose en outre un équipement dans lequel est intégré un module de détection et de communication tel que celui qui vient d'être décrit.

On propose en outre un équipement tel que celui qui vient d'être décrit, l'équipement étant un *smartphone* ou une tablette.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés, parmi lesquels :

[Fig.1] la figure 1 représente deux individus munis chacun d'un *smartphone* équipé d'un module de détection et de communication selon l'invention ;

[Fig.2] la figure 2 représente un module de détection et de communication selon l'invention ;

[Fig.3] la figure 3 représente la mise en œuvre d'une mesure de distance par le module de détection et de communication selon l'invention ;

[Fig.4] la figure 4 représente la structure d'un paquet d'un signal mixte utilisé à la fois pour mettre en œuvre une fonction de reconnaissance faciale et une fonction de communication optique sans fil ;

[Fig.5] la figure 5 représente un individu muni d'un *smartphone* équipé d'un module de détection et de communication selon l'invention, le *smartphone* étant connecté à un réseau LiFi via le module de détection et de communication selon l'invention et via un point d'accès LiFi.

DESCRIPTION DETAILLEE DE L'INVENTION

On décrit ici l'invention en la mettant en œuvre dans des applications particulières qui, bien sûr, ne sont pas limitatives.

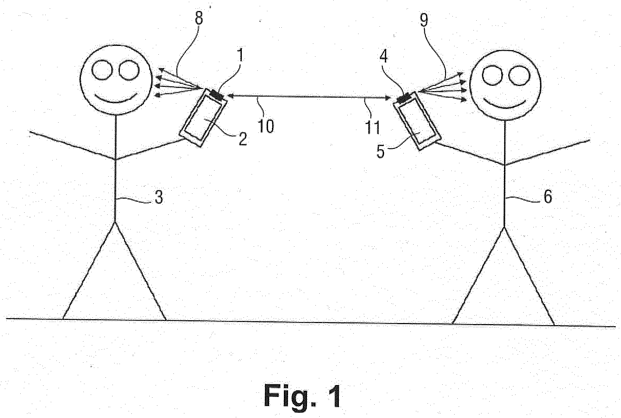

En référence à la figure 1, le module de détection et de communication 1 selon un premier mode de réalisation est ici intégré dans un *smartphone* 2 dont est muni un individu 3. Un autre module de détection et de communication 4, semblable au module de détection et de communication 1, est aussi intégré dans un *smartphone* 5 dont est muni un autre individu 6.

Le module de détection et de communication 1 (tout comme le module de détection et de communication 4) est utilisé pour mettre en œuvre, séparément ou simultanément, une fonction de détection de visage et une fonction de communication optique sans fil. La fonction de détection de visage est ici une fonction de reconnaissance faciale en trois dimensions.

La fonction de reconnaissance faciale réalise une reconnaissance faciale de l'individu 3 par l'envoi de faisceaux lumineux de détection 8 dirigés vers le visage de l'individu 3. Les faisceaux lumineux de détection 8 sont ici des faisceaux infrarouges. Les faisceaux lumineux de détection 8 sont réfléchis par les surfaces du visage de l'individu 3 et les échos ainsi produits sont détectés par le module de détection et de communication 1, qui mesure alors sa distance par rapport aux différentes surfaces du visage de l'individu 3, ce qui permet de reconstruire en trois dimensions le visage de l'individu 3. Le visage reconstruit ainsi obtenu est alors comparé avec un visage de référence stocké dans le *smartphone* 2 pour réaliser la reconnaissance faciale de l'individu 3.

De même, le module de détection et de communication 4 envoie des faisceaux lumineux de détection 9 pour réaliser la reconnaissance faciale de l'individu 6.

Le module de détection et de communication 1 du *smartphone* 2 de l'individu 3 envoie aussi des faisceaux lumineux de communication 10, contenant des données de communication, à destination du module de détection et de communication 4 du *smartphone* 5 de l'individu 6. Les faisceaux lumineux de communication 10 sont ici des faisceaux infrarouges. Les données de communication sont transmises à l'individu 6 et une communication optique sans fil en *peer-to-peer* est établie entre l'individu 3 et l'individu 6. Bien sûr, de manière symétrique, le module de détection et de communication 4 du *smartphone* 5 de l'individu 6 peut aussi envoyer des faisceaux lumineux de communication 11 pour transmettre des données de communication au module de détection et de communication 1 du *smartphone* 2 de l'individu 3. La communication est ainsi une communication bidirectionnelle. Les données de communication sont des données quelconques contenant par exemple un fichier multimédia.

On décrit maintenant plus en détail le module de détection et de communication selon l'invention 1. Le module de détection et de communication 4 est identique au module de détection et de communication 1.

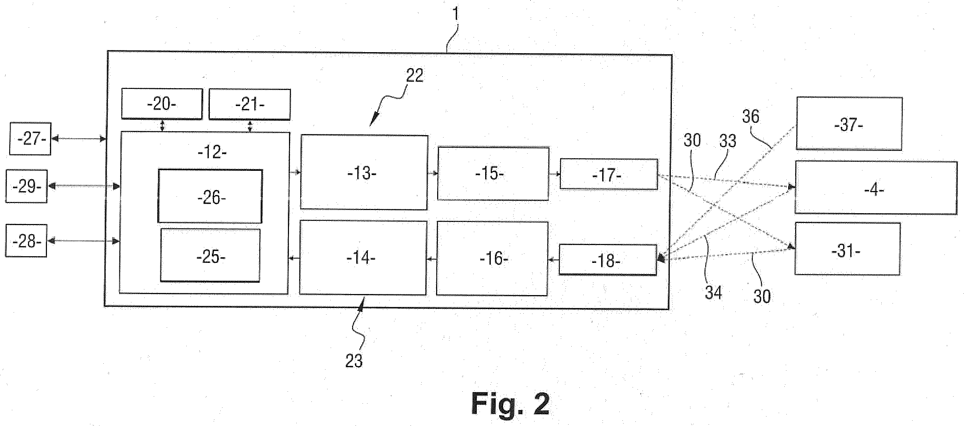

En référence à la figure 2, le module de détection et de communication 1 comprend une unité de traitement 12, un circuit frontal analogique d'émission 13 (ici appelé « AFE d'émission »), un circuit frontal analogique de réception 14 (ici appelé « AFE de réception »), une source lumineuse, en l'occurrence une diode électroluminescente 15 (LED), un photorécepteur, en l'occurrence une photodiode PIN 16.

Le module de détection et de communication 1 comporte aussi un dispositif optique d'émission, en l'occurrence une lentille divergente 17, et un dispositif optique de réception, en l'occurrence une lentille convergente 18.

Le module de détection et de communication 1 est intégré dans un unique composant optoélectronique. L'AFE d'émission 13 et l'AFE de réception 14 sont intégrés dans un même composant électronique.

Le module de détection et de communication 1 comporte aussi une mémoire morte 20 et une mémoire vive 21 qui sont reliées à l'unité de traitement 12.

L'unité de traitement 12, l'AFE d'émission 13, la LED 15 et la lentille divergente 17 forment une chaîne d'émission 22 et sont reliés en série, dans cet ordre, d'amont en aval (c'est-à-dire depuis l'unité de traitement 12 jusqu'à la sortie optique du module de détection et de communication 1).

De même, l'unité de traitement 12, l'AFE de réception 14, la photodiode PIN 16 et la lentille convergente 18 forment une chaîne de réception 23 et sont reliés en série, dans cet ordre, d'amont en aval.

L'unité de traitement 12 comprend ici un microcontrôleur, mais pourrait tout aussi bien comprendre un ou plusieurs autres composants de traitement, tels qu'un FPGA, un ASIC, un processeur, etc.

L'unité de traitement 12 inclut un module de détection 25 et un modem de communication 26 qui sont programmés dans le microcontrôleur : le module de détection 25 et le modem de communication 26 sont ici des modules logiciels *(software)* mais pourraient être des modules matériels (*hardwarei)* ou un mix *software-hardware.*

Le module de détection et de communication 1 est relié à une source d'énergie électrique 27 pour son alimentation. L'unité de traitement 12 est reliée à un bus de données de détection 28 et à un bus de données de communication 29.

Le bus de données de détection 28 et le bus de données de communication 29 peuvent être par exemple des bus de type USB, I2C, I3C, PCL-E, Ethernet, RGMII, SGMII, etc.

Le module de détection et de communication 1 est agencé pour mettre en œuvre, séparément ou simultanément, la fonction de communication optique sans fil et la fonction de reconnaissance faciale.

Le module de détection et de communication 1 peut donc fonctionner selon trois modes de fonctionnement.

Dans un premier mode de fonctionnement, le module de détection et de communication 1 met en œuvre la fonction de reconnaissance faciale, la fonction de communication optique sans fil étant désactivée.

Dans un deuxième mode de fonctionnement, le module de détection et de communication 1 met en œuvre la fonction de communication optique sans fil, la fonction de reconnaissance faciale étant désactivée.

Dans un troisième mode de fonctionnement, le module de détection et de communication 1 met en œuvre simultanément la fonction de reconnaissance faciale et la fonction de communication optique sans fil.

Dans le premier mode de fonctionnement, le module de détection 25 de l'unité de traitement 12 acquiert des données de paramétrage transmises via le bus de données de détection 28. Les données de paramétrage proviennent ici du *smartphone* 2.

Le module de détection 25 génère alors de manière périodique un signal de détection qui est un signal numérique. Le signal de détection est un train d'impulsions de courtes durées (typiquement inférieures à quelques dizaines de nanosecondes).

Le module de détection 25 émet le signal de détection via la chaîne d'émission 22.

Le module de détection 25 transmet le signal de détection à l'AFE d'émission 13. L'AFE d'émission 13 convertit le signal de détection en un premier signal électrique analogique émis adapté à la LED 15. La LED 15 émet alors un ensemble de faisceaux lumineux de détection 30 au travers de la lentille divergente 17.

Les faisceaux lumineux de détection 30 sont projetés vers une surface réfléchissante qui est en l'occurrence une surface du visage 31 de l'individu 3 en possession du *smartphone* 2. Les faisceaux lumineux de détection 30 sont alors réfléchis par le visage 31 puis reçus par la chaîne de réception 23.

La photodiode PIN 16 capte suite à leur réflexion les faisceaux lumineux de détection 30 via la lentille convergente 18 qui concentre les faisceaux lumineux de détection 30 sur la photodicde PIN 16.

La photodiode PIN 16 produit alors un premier signal électrique analogique reçu qui est transformé par l'AFE de réception 14 en un signal numérique adapté à être acquis par le module de détection 25 de l'unité de traitement 12.

Le module de détection 25 mesure alors un temps de vol du signal de détection puis évalue à partir du temps de vol une distance entre le module de détection et de communication 1 et la surface du visage 31 de l'individu 3.

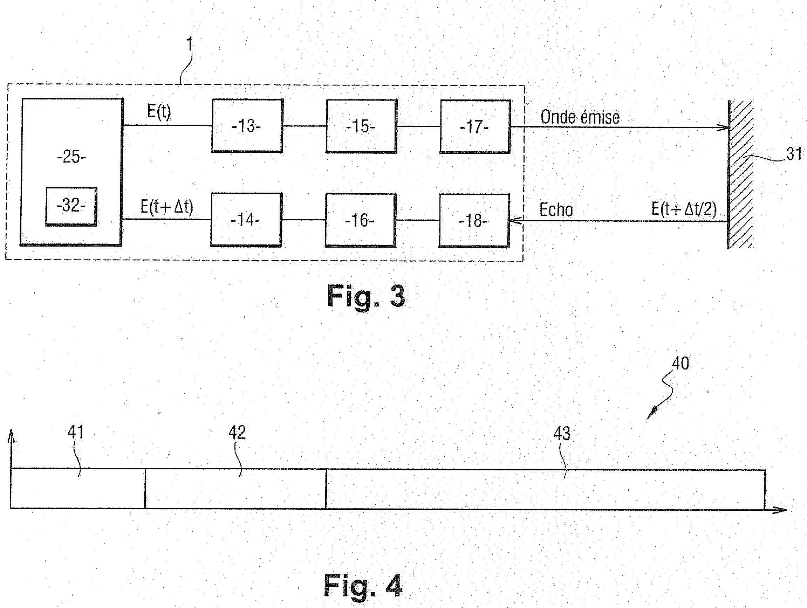

En référence à la figure 3, l'évaluation de la distance par mesure du temps de vol consiste à mesurer le temps écoulé entre l'émission du signal de détection E(t) par le module de détection 25 (via l'AFE d'émission 13, la LED 15 et la lentille divergente 17), et la réception par le module de détection 25 de l'écho $E(t+\Delta t)$ réfléchi par le visage 31 (via la lentille convergente 18, la photodiode PIN 16 et l'AFE de réception 14). Le temps de vol est mesuré par un compteur 32 mis en œuvre dans le module de détection 25.

Le temps de vol $\Delta t$ est proportionnel au rapport entre la distance D entre le module de détection et de communication 1 et la surface réfléchissante (la surface du visage 31), et entre la célérité c de la lumière, selon la relation :

$$\Delta t = 2D/c.$$

Dans le deuxième mode de fonctionnement, le module de détection et de communication 1 est utilisé pour mettre en œuvre la fonction de communication optique sans fil.

L'unité de traitement 12 acquiert sur le bus de données de communication 29 des données de communication à transmettre au *smartphone* 5 de l'individu 6. Le modem de communication 26 de l'unité de traitement 12 met en forme les données de communication et produit un signal émis de communication optique sans fil, qui est un signal numérique contenant les données de communication. La mise en forme est principalement un encodage et une modulation des données. L'AFE d'émission 13 acquiert le signal émis de communication optique sans fil et le convertit en un deuxième signal électrique analogique émis adapté à la LED 15. La LED 15 émet alors un ensemble de faisceaux lumineux de communication 33 au travers de la lentille divergente 17.

Les faisceaux lumineux de communication 33 se propagent alors en espace libre et sont reçus par le module de détection et de communication 4 du *smartphone* 5 de l'individu 6. Le module de détection et de communication 4 acquiert ainsi les données de communication.

De même, lorsque le module de détection et de communication 4 transmet des données de communication au module de détection et de communication 1, le module de détection et de communication 1 reçoit des faisceaux lumineux de communication 34 via la lentille convergente 18 puis la photodiode PIN 16. La photodiode PIN 16 produit alors un deuxième signal électrique analogique reçu qui est transformé par l'AFE de réception 14 en un signal reçu de communication optique sans fil qui est un signal numérique adapté à être acquis par le modem de communication 26 de l'unité de traitement 12.

Le modem de communication 26 démodule et décode les données de communication reçues.

On note que des faisceaux 36 issus de la lumière ambiante 37 peuvent être collectés par le module de détection et de communication 1 et donc générer des interférences.

L'effet de ces interférences est limité voire annulé grâce à un filtrage optique réalisé par la lentille convergente 18, grâce à un filtrage analogique réalisé dans l'AFE de réception 14, et grâce à un filtrage numérique réalisé dans le modem de communication 26 de l'unité de traitement 12.

Dans le troisième mode de fonctionnement, l'unité de traitement 12 acquiert à la fois des données de paramétrage transmises via le bus de données de détection 28, et des données de communication transmises via le bus de données de communication 29.

Un signal mixte unique est généré par l'unité de traitement 12 à partir des données de paramétrage et des données de communication. Le signal de détection et le signal émis de communication optique sans fil sont inclus dans le signal mixte. Le signal mixte est alors transmis via des faisceaux lumineux globaux produits par la chaîne d'émission 22, comme cela a été décrit plus tôt.

Le signal mixte est formé de paquets semblables au paquet 40 visible sur la figure 4. Le paquet 40 comprend une trame de détection 41, suivie d'un préambule de communication 42 puis d'une trame de communication 43.

La trame de détection 41 contient un signal utile pour réaliser la reconnaissance faciale. Il s'agit ici d'un signal binaire présentant une autocorrélation élevée, en l'occurrence ici un code de bruit pseudo-aléatoire (plus communément appelé *pseudo-random noise* ou code PN). Le signal utile pourrait comprendre un signal différent, par exemple une séquence Barker.

Le code PN est unique et propre à chaque module de détection et de communication. Le nombre de codes PN n'étant pas infini, on peut prévoir que la communication optique sans fil puisse être utilisée dans un premier temps pour définir le code PN utilisé par chaque module de détection et de communication des équipements connectés dans un réseau.

Le préambule de communication 42 contient des informations sur les caractéristiques de la communication optique sans fil.

La trame de communication 43 contient les données à transmettre, en l'occurrence les données de communication issues du bus de communication 29, qui ont été encodées et modulées.

Les faisceaux lumineux globaux contiennent donc une première portion de faisceaux qui va être réfléchie par les surfaces réfléchissantes du visage et qui forme les faisceaux lumineux de détection, et une deuxième portion de faisceaux qui est reçue par le module de détection et de communication 4 du *smartphone* 5 de l'individu 6 et qui forme les faisceaux lumineux de communication.

La première portion de faisceaux est reçue par le module de détection et de communication 1 après sa réflexion. Seule la trame de détection 41 est prise en compte, en faisant abstraction du préambule de communication 42 et de la trame de communication 43. Comme la trame de détection 41 présente une autocorrélation élevée, le module de détection et de communication 1 identifie efficacement la trame de détection 41 réfléchie correspondant à la trame de détection 41 émise.

La deuxième portion de faisceaux est reçue par le module de détection et de communication 4 et est traitée, démodulée et décodée conformément à ce qui a été décrit. Le préambule de communication 42 et de la trame de communication 43 sont pris en compte, en faisant abstraction de la trame de détection 41.

Alternativement, le code PN utilisé dans la trame de détection 41 peut encapsuler des données d'horodatage (*timestamp*) correspondant à l'instant d'émission du signal mixte par le module de détection et de communication 1. Ainsi, cette fois, lorsque le signal mixte est reçu par le module de détection et de communication 4, la trame de détection 41 n'est plus ignorée mais décodée, et les données d'horodatage sont récupérées. Les données d'horodatage sont alors comparées à des données d'horodatage locales correspondant à l'instant de réception du signal mixte par le module de détection et de communication 4, ce qui permet de déterminer un temps de transmission mis par le signal mixte pour cheminer entre le module de détection et de communication 1 et le module de détection et de communication 4. Un processus similaire peut aussi être utilisé du module de détection et de communication 4 vers le module de détection et de communication 1. Ceci permet aux différents équipements présents dans le réseau de connaître leurs distances relatives.

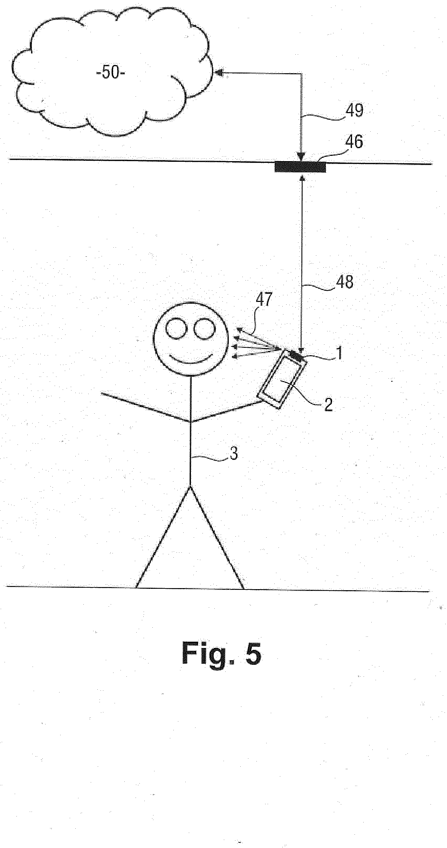

En référence à la figure 5, la fonction de communication optique sans fil pourrait aussi être utilisée pour connecter le *smartphone* 2 à un réseau LiFi via un point d'accès LiFi 46.

Dans ce cas, le module de détection et de communication 1 du *smartphone* 2 de l'individu 3 envoie, d'une part, des faisceaux lumineux de détection 47 pour réaliser la reconnaissance faciale, comme cela a été décrit plus tôt, et d'autre part, des faisceaux lumineux de communication 48 vers le point d'accès LiFi 46. Les faisceaux lumineux de détection 47 et les faisceaux lumineux de communication 48 sont envoyés simultanément (formant ainsi des faisceaux lumineux globaux comme dans le troisième mode de fonctionnement précédemment décrit) ou bien séparément.

Le point d'accès LiFi 46 est lui-même connecté par une fibre optique ou par un câble électrique 49 à un réseau local ou public 50 comme Internet.

On a donc décrit un module de détection et de communication selon un premier mode de réalisation de l'invention, qui est agencé pour mettre en œuvre une fonction de reconnaissance faciale et une fonction de communication optique sans fil.

Dans un deuxième mode de réalisation de l'invention, la fonction de détection de visage est cette fois une fonction de protection oculaire. Le module de détection et de communication selon le deuxième mode de réalisation de l'invention est donc agencé pour mettre en œuvre une fonction de protection oculaire et une fonction de communication optique sans fil. Le module de détection et de communication selon le deuxième mode de réalisation de l'invention est ici semblable, au niveau *hardware,* au module de détection et de communication selon le premier mode de réalisation de l'invention 1.

La fonction principale est la fonction de communication optique sans fil : le module de détection et de communication, comme cela a déjà été décrit, émet via la chaîne d'émission 22 un signal émis de communication optique sans fil contenant des données à transmettre, et reçoit via la chaîne de réception 23 un signal reçu de communication optique sans fil.

A intervalles réguliers, l'unité de traitement 12 émet via la chaîne d'émission 22 un signal de détection. Lorsqu'un obstacle se trouve à proximité du module de détection et de communication, par exemple une surface du visage d'un individu qui tient un *smartphone* dans lequel est intégré le module de détection et de communication, l'unité de traitement 12 reçoit via la chaîne de réception 23 le signal de détection suite à sa réflexion contre ledit obstacle.

L'unité de traitement 12 évalue alors une distance entre le module de détection et de communication et ledit obstacle.

Tant que la distance entre le module de détection et de communication et l'obstacle demeure supérieure ou égale à un seuil prédéfini, l'unité de traitement 12 continue à émettre le signal émis de communication optique sans fil.

Lorsque la distance entre le module de détection et de communication et l'obstacle devient inférieure au seuil prédéfini, l'unité de traitement 12 stoppe l'émission du signal émis de communication optique sans fil et interrompt ainsi l'émission des faisceaux lumineux de communication.

Cette fonction de protection oculaire permet de protéger les yeux de l'individu lorsque celui-ci approche la source lumineuse du module de détection et de communication trop près de ses yeux. Les risques photo-biologiques liés à l'utilisation de la communication optique sans fil sont donc maîtrisés.

La mise en œuvre de cette fonction de protection oculaire permet d'augmenter sans risque la puissance d'émission utilisée pour émettre le signal émis de communication optique sans fil, en utilisant par exemple une source lumineuse comprenant une diode laser à cavité verticale émettant par la surface (ou VCSEL, pour *vertical-cavity surface-emitting-laser*). On améliore ainsi la portée et la qualité de la communication optique sans fil.

On coupe donc l'émission des faisceaux lumineux de communication dès que l'unité de traitement détecte un obstacle trop proche, quel que soit l'obstacle. Il serait possible de mettre en œuvre une fonction de protection oculaire qui détecterait que l'obstacle est bien un visage, voire même que l'obstacle est bien un œil, par exemple en mettant en œuvre des traitements de reconnaissance des formes d'un visage. La fonction de protection oculaire se rapproche alors de la fonction de reconnaissance faciale.

On note par ailleurs que les trois fonctions peuvent parfaitement être mises en œuvre dans un même module de détection et de communication.

Par exemple, la fonction de protection oculaire peut être déclenchée dès qu'une communication optique sans fil débute, pour assurer la sécurité de l'individu. La fonction de reconnaissance faciale est quant à elle déclenchée dès que l'individu tente de s'authentifier. Lorsque la fonction de reconnaissance faciale est déclenchée et que l'unité de traitement détecte qu'un obstacle (soit quelconque, soit un visage, soit un œil) est trop proche, l'unité de traitement interrompt la reconnaissance faciale.

Bien entendu, l'invention n'est pas limitée au mode de réalisation décrit mais englobe toute variante entrant dans le champ de l'invention telle que définie par les revendications.

On a indiqué ici que la source lumineuse du module de détection et de communication comprend une LED. La source lumineuse pourrait être différente et par exemple comprendre une LED à cavité résonnante ou un VCSEL. Bien sûr, la source lumineuse peut comprendre plusieurs composants similaires, par exemple plusieurs LEDs, ou bien plusieurs composants différents, par exemple une ou plusieurs LEDs et une ou plusieurs diodes lasers à cavité verticale émettant par la surface.

De même, le photorécepteur pourrait être différent et comprendre une ou plusieurs photodiodes PIN, une ou plusieurs photodiodes à avalanche ou bien une diode à avalanche à photon unique ou une matrice de diodes à avalanche à photon unique.

De même, le dispositif optique d'émission n'est pas nécessairement une lentille divergente mais pourrait comprendre une lentille convergente ou une lentille *freeform.*

De même, le dispositif optique de réception n'est pas nécessairement une lentille convergente mais pourrait comprendre une lentille *freeform* ou un concentrateur optique.

On a décrit que le module de détection et de communication est intégré dans un *smartphone,* mais il peut bien sûr être intégré dans un équipement différent, par exemple dans une tablette.

## Revendications

1. Module de détection et de communication (1) agencé pour mettre en œuvre une fonction de détection de visage et une fonction de communication optique sans fil, et comportant une unité de traitement (12), une chaîne d'émission (22) comprenant un circuit frontal analogique d'émission (13) et une source lumineuse (15), et une chaîne de réception (23) comprenant un circuit frontal analogique de réception (14) et un photorécepteur (16),

   l'unité de traitement (12) étant agencée pour émettre via la chaîne d'émission (22) un signal de détection, pour recevoir via la chaîne de réception (23) le signal de détection suite à sa réflexion sur une surface du visage (31) d'un individu, pour mesurer un temps de vol du signal de détection, et pour évaluer une distance entre le module de détection et de communication (1) et la surface du visage (31) de l'individu,
   l'unité de traitement (12) étant en outre agencée pour émettre via la chaîne d'émission (22) un signal émis de communication optique sans fil contenant des données à transmettre, et pour recevoir via la chaîne de réception (23) un signal reçu de communication optique sans fil,
   le module de détection et de communication (1) étant tel que le signal de détection et le signal émis de communication optique sans fil sont inclus dans un même signal mixte le module de détection et de communication étant **caractérisé en ce que** ledit signal mixte comporte des paquets (40) comprenant chacun une trame de détection du visage (41), un préambule de communication (42) et une trame de communication (43) comprenant les données à transmettre.

2. Module de détection et de communication selon la revendication 1, dans lequel la fonction de détection de visage est une fonction de reconnaissance faciale.

**3.** Module de détection et de communication selon la revendication 1, dans lequel la fonction de détection de visage est une fonction de protection oculaire, et dans lequel l'unité de traitement est agencée pour interrompre l'émission du signal émis de communication optique sans fil lorsque la distance entre le module de détection et de communication et la surface du visage de l'individu est inférieure à un seuil prédéfini.

**4.** Module de détection et de communication selon l'une quelconque des revendications 1 à 3, dans lequel la trame de détection (41) comprend un signal binaire présentant une autocorrélation élevée.

**5.** Module de détection et de communication selon la revendication 4, dans lequel le signal binaire comprend un code *pseudo-random noise.*

**6.** Module de détection et de communication selon la revendication 5, dans lequel la fonction de communication optique sans fil est utilisée pour définir le code *pseudo-random noise* attribué au module de détection et de communication (1).

**7.** Module de détection et de communication selon l'une quelconque des revendications 1 à 6, dans lequel la trame de détection (41) intègre des données d'horodatage permettant à un autre module de détection et de communication récepteur du signal mixte de calculer un temps de transmission du signal mixte depuis le module de détection et de communication vers cet autre module de détection et de communication.

**8.** Module de détection et de communication selon l'une des revendications précédentes, le circuit frontal analogique d'émission (13) et le circuit frontal analogique de réception (14) étant intégrés dans un même composant électronique.

**9.** Module de détection et de communication selon l'une des revendications précédentes, le module de détection et de communication (1) étant intégré dans un unique composant optoélectronique.

**10.** Module de détection et de communication selon l'une des revendications précédentes, comprenant en outre un dispositif optique d'émission (17) en sortie de la chaîne d'émission (22).

**11.** Module de détection et de communication selon la revendication 10, dans lequel le dispositif optique d'émission (17) comprend une première lentille convergente ou une lentille divergente ou une première lentille *freeform.*

**12.** Module de détection et de communication selon l'une des revendications précédentes, comprenant en outre un dispositif optique de réception (18) en entrée de la chaîne de réception (23).

**13.** Module de détection et de communication selon la revendication 12, dans lequel le dispositif optique de réception (18) comprend une deuxième lentille convergente ou une deuxième lentille *freeform* ou un concentrateur optique.

**14.** Module de détection et de communication selon l'une des revendications précédentes, dans lequel la source lumineuse (15) comprend une LED ou une LED à cavité résonnante ou une diode laser à cavité verticale émettant par la surface.

**15.** Module de détection et de communication selon l'une des revendications précédentes, dans lequel le photorécepteur (16) comprend une photodiode PIN ou une photodiode à avalanche ou une diode à avalanche à photon unique.

**16.** Equipement (2) dans lequel est intégré un module de détection et de communication selon l'une des revendications précédentes.

**17.** Equipement selon la revendication 16, l'équipement étant un *smartphone* ou une tablette.

## Patentansprüche

**1.** Erkennungs- und Kommunikationsmodul (1), das angeordnet ist, um eine Gesichtserkennungsfunktion und eine drahtlose optische Kommunikationsfunktion umzusetzen, und eine Verarbeitungseinheit (12), eine Sendekette (22), die eine analoge Frontend-Sendeschaltung (13) und eine Lichtquelle (15) umfasst, und eine Empfangskette (23) beinhaltet, die eine analoge Frontend-Empfangsschaltung (14) und einen Photorezeptor (16) umfasst,

wobei die Verarbeitungseinheit (12) angeordnet ist, um über die Sendekette (22) ein Erkennungssignal zu senden, um über die Empfangskette (23) das Erkennungssignal infolge seiner Reflexion auf einer Gesichtsoberfläche (31) eines Individuums zu empfangen, um eine Flugzeit des Erkennungssignals zu messen und um einen Abstand zwischen dem Erkennungs- und Kommunikationsmodul (1) und der Oberfläche des Gesichts (31) des Individuums zu bewerten, wobei die Verarbeitungseinheit (12) weiter angeordnet ist, um über die Sendekette (22) ein gesendetes drahtloses optisches Kommunikationssignal zu senden, das zu übertragende Daten enthält, und über die Empfangskette (23) ein empfangenes drahtloses optisches Kommunikationssignal zu empfangen,
wobei das Erkennungs- und Kommunikationsmodul (1) so ist, dass das Erkennungssignal und das gesendete drahtlose optische Kommunikationssignal in ein gleiches gemischtes Signal eingeschlossen sind, wobei das Erkennungs- und Kommunikationsmodul **dadurch gekennzeichnet ist, dass** das gemischte Signal Pakete (40) beinhaltet, die jeweils ein Gesichtserkennungsraster (41), eine Kommunikationspräambel (42) und ein Kommunikationsraster (43) umfassen, der die zu übertragenden Daten umfasst.

**2.** Erkennungs- und Kommunikationsmodul nach Anspruch 1, wobei die Gesichtserkennungsfunktion eine Gesichtswiedererkennungsfunktion ist.

**3.** Erkennungs- und Kommunikationsmodul nach Anspruch 1, wobei die Gesichtserkennungsfunktion eine Augenschutzfunktion ist, und wobei die Verarbeitungseinheit angeordnet ist, um das Senden des gesendeten drahtlosen optischen Kommunikationssignals zu unterbrechen, wenn der Abstand zwischen dem Erkennungs- und Kommunikationsmodul und der Oberfläche des Gesichts des Individuums kleiner als ein vordefinierter Schwellenwert ist.

**4.** Erkennungs- und Kommunikationsmodul nach einem der Ansprüche 1 bis 3, wobei das Erkennungsraster (41) ein binäres Signal umfasst, das eine hohe Selbstkorrelation aufweist.

**5.** Erkennungs- und Kommunikationsmodul nach Anspruch 4, wobei das binäre Signal einen *Pseudo-Random-Noise*-Code umfasst.

**6.** Erkennungs- und Kommunikationsmodul nach Anspruch 5, wobei die drahtlose optische Kommunikationsfunktion verwendet wird, um den dem Erkennungs- und Kommunikationsmodul (1) zugewiesenen *Pseudo-Random-Noise*-Code zu definieren.

**7.** Erkennungs- und Kommunikationsmodul nach einem der Ansprüche 1 bis 6, wobei das Erkennungsraster (41) Zeitstempeldaten integriert, die es einem anderen Erkennungs- und Kommunikationsmodul als Empfänger des gemischten Signals ermöglichen, eine Übertragungszeit des gemischten Signals von dem Erkennungs- und Kommunikationsmodul zu diesem anderen Erkennungs- und Kommunikationsmodul zu berechnen.

**8.** Erkennungs- und Kommunikationsmodul nach einem der vorstehenden Ansprüche, wobei die analoge Frontend-Sendeschaltung (13) und die analoge Frontend-Empfangsschaltung (14) in einer gleichen elektronischen Komponente integriert sind.

**9.** Erkennungs- und Kommunikationsmodul nach einem der vorstehenden Ansprüche, wobei das Erkennungs- und Kommunikationsmodul (1) in einer einzigen optoelektronische Komponente integriert ist.

**10.** Erkennungs- und Kommunikationsmodul nach einem der vorstehenden Ansprüche, das weiter eine optische Sendevorrichtung (17) an dem Ausgang der Sendekette (22) umfasst.

**11.** Erkennungs- und Kommunikationsmodul nach Anspruch 10, wobei die optische Sendevorrichtung (17) eine erste konvergierende Linse oder eine divergierende Linse oder eine erste *Freeform-Linse* umfasst.

**12.** Erkennungs- und Kommunikationsmodul nach einem der vorstehenden Ansprüche, das weiter eine optische Empfangsvorrichtung (18) an dem Eingang der Empfangskette (23) umfasst.

**13.** Erkennungs- und Kommunikationsmodul nach Anspruch 12, wobei die optische Empfangsvorrichtung (18) eine zweite konvergierende Linse oder eine zweite *Freeform*-Linse oder einen optischen Konzentrator umfasst.

**14.** Erkennungs- und Kommunikationsmodul nach einem der vorhergehenden Ansprüche, wobei die Lichtquelle (15) eine LED oder eine LED mit Resonanzkammer oder eine von der Oberfläche ausstrahlende Laserdiode mit vertikaler Kammer umfasst.

**15.** Erkennungs- und Kommunikationsmodul nach einem der vorstehenden Ansprüche, wobei der Photorezeptor (16) eine PIN-Photodiode oder eine Lawinen-Photodiode oder eine Einzelphotonen-Lawinendiode umfasst.

**16.** Ausrüstung (2), in der ein Erkennungs- und Kommunikationsmodul nach einem der vorstehenden Ansprüche integriert ist.

**17.** Ausrüstung nach Anspruch 16, wobei die Ausrüstung ein *Smartphone* oder ein Tablet-Computer ist.

## Claims

**1.** A detection and communication module (1) arranged to implement a face detection function and an optical wireless communication function, and comprising a processing unit (12), a transmission chain (22) comprising a transmission analog front-end circuit (13) and a light source (15), and a reception chain (23) comprising a reception analog front-end circuit (14) and a photoreceiver (16),
the processing unit (12) being arranged to transmit via the transmission chain (22) a detection signal, to receive via the reception chain (23) the detection signal following its reflection on a surface of the face (31) of an individual, to measure a time of flight of the detection signal, and to evaluate a distance between the detection and communication module (1) and the surface of the face (31) of the individual,
the processing unit (12) being further arranged to transmit via the transmission chain (22) a transmitted optical wireless communication signal containing data to be transmitted, and to receive via the reception chain (23) a received optical wireless communication signal, the detection and communication module (1) being such that the detection signal and the transmitted wireless optical communication signal are included in a single mixed signal the detection and communication module being **characterized in that** said single mixed signal comprises packets (40) each comprising a face detection frame (41), a communication preamble (42), and a communication frame (43) comprising the data to be transmitted.

**2.** The detection and communication module according to claim 1, wherein the face detection function is a facial recognition function.

**3.** The detection and communication module according to claim 1, wherein the face detection function is an eye protection function, and wherein the processing unit is arranged to interrupt transmission of the transmitted optical wireless communication signal when the distance between the detection and communication module and the surface of the individual's face is below a predefined threshold.

**4.** The detection and communication module according to any one of claims 1 to 3, wherein the detection frame (41) comprises a binary signal having high autocorrelation.

**5.** The detection and communication module according to claim 4, wherein the binary signal comprises a *pseudo-random noise* code.

**6.** The detection and communication module according to claim 5, wherein the optical wireless communication function is used to define the pseudo-random noise code assigned to the detection and communication module (1).

**7.** The detection and communication module according to any one of claims 1 to 6, wherein the detection frame (41) incorporates timestamp data enabling another detection and communication module that receives the mixed signal for calculating a transmission time of the mixed signal from the detection and communication module to this other detection and communication module.

**8.** The detection and communication module according to any of the preceding claims, wherein the transmission analog front-end circuit (13) and the reception analog front-end circuit (14) are integrated in a single electronic component.

**9.** The detection and communication module according to any of the preceding claims, wherein the detection and communication module (1) is integrated into a single optoelectronic component.

**10.** The detection and communication module according to any of the preceding claims, further comprising an optical transmission device (17) at the output of the transmission chain (22).

**11.** The detection and communication module according to claim 10, wherein the optical transmission device (17) comprises a first converging lens or a diverging lens or a first *freeform* lens.

**12.** The detection and communication module according to any of the preceding claims, further comprising an optical reception device (18) at the input of the reception chain (23).

**13.** The detection and communication module according to claim 12, wherein the optical reception device (18) comprises a second converging lens or a second *freeform* lens or an optical concentrator.

**14.** The detection and communication module according to any of the preceding claims, wherein the light source (15) comprises a LED or a resonant cavity LED or a vertical cavity laser diode emitting through the surface.

**15.** The detection and communication module according to any of the preceding claims, wherein the photoreceptor (16) comprises a PIN photodiode or an avalanche photodiode or a single photon avalanche diode.

**16.** An equipment (2) wherein a detection and communication module according to one of the preceding claims is integrated.

**17.** The equipment according to claim 16, wherein the equipment is a smartphone or tablet.

8
1
4
9
10
11
2
5
3
6

Fig. 1

-37-
-4-
-31-
36
33
30
34
30
1
22
23
-17-
-18-
-15-
-16-
-13-
-14-
-12-
-21-
-20-
-26-
-25-
-27-
-29-
-28-

Fig. 2

31
Onde émise
E(t+Δt/2)
Echo
-17-
-18-
-15-
-16-
-13-
-14-
1
E(t)
E(t+Δt)
-25-
-32-
40
43
42
41

Fig. 3

Fig. 4

-50-
49
46
48
47
1
2
3

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2019034838 A1